# EUROPEAN PATENT APPLICATION

(11) **EP 4 738 131 A1**
(43) Date of publication of application: **06.05.2026**
(21) Application number: 25210432.8
(22) Date of filing: 22.10.2025
(51) Int. Cl.: G06F 12/1027, G06F 12/1081

(54) **SYSTEMS AND METHODS FOR ADDRESS TRANSLATION IN SWITCH APPARATUSES**

(30) Priority: 29.10.2024 US 202418929847
(71) Applicant: Avago Technologies International Sales Pte. Limited, Singapore 768923 (SG)
(72) Inventor: Khaparde, Ajit Kumar, Irvine, 92603 (US)
(74) Representative: Dilg, Haeusler, Schindelmann Patentanwaltsgesellschaft mbH

(57) **Abstract**

The subject technology is directed to a switch apparatus for address translation in data communication systems. In an embodiment, the switch apparatus includes a first port configured to receive a first request associated with a first address and a cache configured to store a plurality of mapping entries. The switch apparatus further includes a routing unit coupled to the cache, configured to determine the presence or absence of a second address associated with the first address in the cache. The cache allows for efficient storage and retrieval of frequently used address translations, reducing the need to repeatedly access the host system for address translations. This minimizes latency in handling data requests and improves overall system performance. By retrieving address translations from the cache, the system can optimize data flow and enhance the speed and efficiency of data communication across multiple devices. There are other embodiments as well.

## Description

### BACKGROUND OF THE INVENTION

In modern computing and networking environments, reliable and efficient communication between devices is important for maintaining system performance and uptime. Many systems involve multiple devices, such as network interface cards (NICs), storage devices, and processing units, that work together to handle high-volume data traffic. These devices may be interconnected through switches, which manage data routing between devices and external systems, including host systems and other endpoints.

Some approaches for data transfer between devices rely on direct memory access (DMA), which allows devices to access memory directly without burdening the central processing unit (CPU). This improves overall efficiency by reducing processing overhead and enabling faster data transfers. For instance, peripheral component interconnect express (PCIe) is a standard that supports high-speed communication between devices, such as NICs, processing units, and storage controllers. PCIe enables direct connections between devices via a bus structure, facilitating efficient data flow between multiple endpoints through switches.

As systems become more complex, especially with high-performance workloads such as artificial intelligence (Al) and machine learning (ML), the efficiency of address translation and data routing becomes increasingly important. Devices generating data requests, such as those involving DMA, often use virtual addresses, which must be translated into physical addresses before the data can be routed to its destination. In various implementations, the address translation may be handled by mechanisms such as input/output memory management units (IOMMUs). However, frequent address translations can introduce delays, especially when the same address translations are requested repeatedly, impacting overall system performance.

Various approaches for performing address translation in complex systems have been explored, but they have proven to be insufficient. It is important to recognize the need for new and improved systems and methods.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a schematic diagram illustrating an architecture of a computing system with an address translation service (ATS) mechanism, in accordance with various embodiments of the subject technology.
Figure 2 is a schematic diagram illustrating an architecture of a computing system that supports direct memory access (DMA), in accordance with various embodiments of the subject technology.
Figure 3 is a schematic diagram illustrating a hierarchical PCIe switch system with integrated address translation cache (ATC), in accordance with various embodiments of the subject technology.
Figure 4 is a schematic diagram illustrating a switch apparatus, in accordance with various embodiments of the subject technology.
Figure 5 is a schematic diagram illustrating switch mappings and configuration of a computing system, in accordance with various embodiments of the subject technology.

### DETAILED DESCRIPTION OF THE INVENTION

The subject technology is directed to a switch apparatus for address translation in data communication systems. In an embodiment, the switch apparatus includes a first port configured to receive a first request associated with a first address and a cache configured to store a plurality of mapping entries. The switch apparatus further includes a routing unit coupled to the cache, configured to determine the presence or absence of a second address associated with the first address in the cache. The cache allows for efficient storage and retrieval of frequently used address translations, reducing the need to repeatedly access the host system for address translations. This minimizes latency in handling data requests and improves overall system performance. By retrieving address translations from the cache, the system can optimize data flow and enhance the speed and efficiency of data communication across multiple devices. There are other embodiments as well.

One general aspect includes a switch apparatus, which comprises: a first port configured to receive a first request associated with a first address; a cache configured to store a plurality of mapping entries; a routing unit coupled to the cache. The routing unit is configured to: determine a presence or an absence of a second address in the plurality of mapping entries, the second address being associated with the first address; in response to a determination of the presence of the second address in the plurality of mapping entries, retrieve the second address; and in response to a determination of the absence of the second address in the plurality of mapping entries, forward the first request to a first device to obtain the second address, the first device is configured to provide the second address by performing an address translation based on the first address. The switch apparatus further comprises a second port coupled to the routing unit, the second port being configured to transmit the first request based on the second address. The routing unit is configured to update the cache with a first mapping entry associating the first address with the second address obtained from the first device.

Implementations may include one or more of the following features. The switch apparatus further comprises a buffer coupled to the routing unit, the buffer being configured to store the first request. The switch apparatus further comprises a controller coupled to the cache, the controller is configured to manage the plurality of mapping entries stored in the cache based on a predetermined criterion. the predetermined criterion comprises at least one of an access frequency, a storage duration, or a cache capacity. The first address comprises a virtual address. The second address comprises a physical address. The first request comprises a direct memory access (DMA) request. The first device comprises an upstream component. The upstream component comprises a second switch or a host.

According to another embodiment, the subject technology provides a switch apparatus, which comprises: a first port configured to receive a first request associated with a first address; a cache configured to store a plurality of mapping entries; and a routing unit coupled to the cache. The routing unit is configured to: determine a presence or an absence of a second address in the plurality of mapping entries, the second address being associated with the first address; in response to a determination of the presence of the second address in the plurality of mapping entries, retrieve the second address; and in response to a determination of the absence of the second address in the plurality of mapping entries, forward the first request to a first device to obtain the second address. The switch apparatus further comprises a second port coupled to the routing unit, the second port being configured to transmit the first request based on the second address. The routing unit is configured to update the cache with a first mapping entry associating the first address with the second address obtained from the first device.

Implementations may include one or more of the following features. The switch apparatus further comprises a buffer coupled to the routing unit, the buffer being configured to store the first request. The switch apparatus further comprises a controller coupled to the cache, the controller is configured to manage the plurality of mapping entries stored in the cache based on a predetermined criterion. The predetermined criterion comprises at least one of an access frequency, a storage duration, or a cache capacity. The first address comprises a virtual address. The second address comprises a physical address. The first request comprises a direct memory access (DMA) request. The first device comprises an upstream component.

According to yet another embodiment, the subject technology provides a switch apparatus, which comprises: a first port configured to receive a first request associated with a first address; a cache configured to store a plurality of mapping entries, the plurality of mapping entries comprising a first mapping entry associating the first address with a second address; a controller coupled to the cache, the controller is configured to manage the plurality of mapping entries stored in the cache based on a predetermined criterion; a routing unit coupled to the cache, the routing unit is configured to determine a destination for the first request based on the second address; and a second port coupled to the routing unit, the second port being configured to transmit the first request to the destination. In various embodiments, the predetermined criterion comprises at least one of an access frequency, a storage duration, or a cache capacity. The first address comprises a virtual address and the second address comprises a physical address.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent, or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

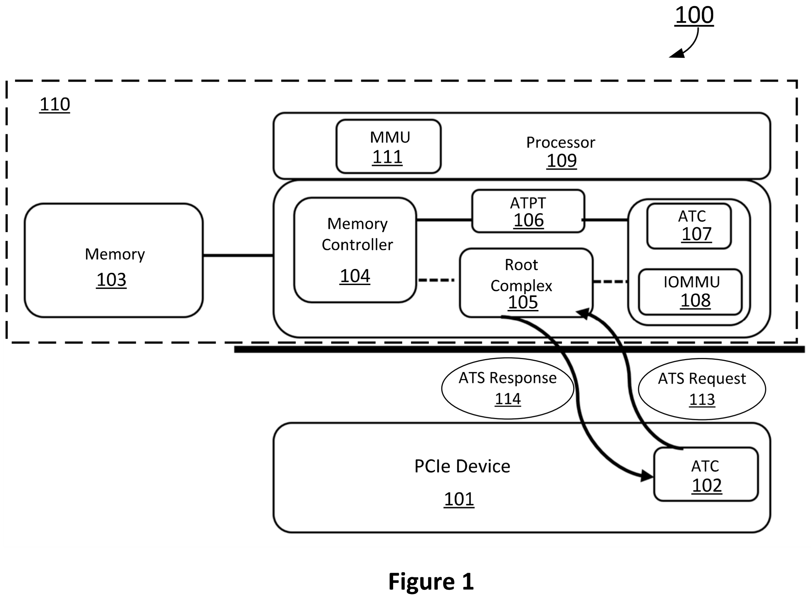

Figure 1 is a schematic diagram illustrating an architecture of a computing system 100 with an address translation service (ATS) mechanism, in accordance with various embodiments of the subject technology. This diagram merely provides an example, which should not unduly limit the scope of the claims. One of ordinary skill in the art would recognize many variations, alternatives, and modifications.

In various implementations, system 100 represents a distributed computing architecture that interconnects multiple hardware components to facilitate seamless communication and high-speed data transfers. For example, system 100 is designed to support high-speed communication between multiple devices, such as network interface cards (NICs), graphics processing units (GPUs), and storage controllers. These devices are interconnected through a switch, which facilitates data routing between devices and external systems such as host systems and other endpoints. System 100 can be applied in various computing environments, such as data centers, AI/ML workloads, cloud computing, high-performance computing systems, and/or the like.

In various implementations, PCI Express (PCIe) is used to facilitate high-speed communication between the components. PCIe is a high-speed serial bus interface that allows for low-latency, high-bandwidth data exchanges between connected devices, such as CPU, memory, NICs, GPUs, and storage controllers. It supports chip-to-chip and board-to-board interconnections via cards and connectors, allowing multiple devices to communicate through shared data pathways. PCIe is useful in high-performance computing environments where large volumes of data need to be transmitted efficiently between processing units and memory.

Depending on the implementation, system 100 may utilize direct memory access (DMA) to transfer data between components. For instance, the term "direct memory access" may refer to a process in which devices can transfer data directly between their own memory and the system memory without needing intervention from the CPU. This mechanism reduces CPU overhead and accelerates data transfer rates, which is beneficial in high-performance computing environments where multiple devices frequently exchange large amounts of data. In AI/ML workloads, for example, a NIC could directly transfer data to a GPU for processing without requiring the CPU to handle each transaction.

According to some embodiments, system 100 may include device 101. For instance, device 101 may include an endpoint device. The term "endpoint" or "endpoint device" may refer to any device connected to a shared bus that communicates with other components in the system through a switch or root complex. Examples of endpoints may include, without limitation, NICs, GPUs, storage devices, and/or other peripheral devices. In some examples, device 101 may perform DMA and directly communicate with another endpoint device. For instance, device 101 may include a NIC, which may directly transfer large datasets to a GPU for processing, bypassing system memory.

In various implementations, for DMA operations to occur, endpoint devices (e.g., device 101) need to perform address translation to ensure that they are communicating using the correct memory addresses. For example, the term "address translation" may refer to a process of converting one type of memory address into another type. For instance, this may involve translating a virtual address (VA) used by a device into a physical address (PA) used by the system memory, or vice versa. The address translation ensures that memory access requests from endpoint devices are correctly routed to the proper locations in physical memory. In some examples, device 101 may operate using a virtual address, which represents an abstracted memory location within the virtual memory space assigned to the device. Virtual addresses may be mapped by the system to physical addresses to enable actual data transfers. For example, the term "physical address" refers to the real location of data in system memory, which is used by the hardware to access memory directly.

In some embodiments, device 101 interacts with host system 110 to perform address translation. For instance, the term "host" or "host system" may refer to a central component that manages and coordinates the operations of connected devices. Host system 110 may be responsible for managing address translation and coordinating communication between devices. In various examples, host system 110 may include at least one of memory 103, memory controller 104, processor 109, memory management unit (MMU) 111, address translation and protection table (ATPT) 106, root complex 105, first cache 107, input/out memory management unit (IOMMU) 108, and/or the like.

In various implementations, device 101 relies on the address translation service (ATS) to perform address translation. ATS may be defined by the PCIe standard as a mechanism that allows PCIe devices to request and manage their address translations. When device 101 needs to access memory, it generates ATS request 113 and sends it to root complex 105. For example, the term "root complex" may refer to a component in the system hierarchy that connects the host system to the endpoints. Root complex 105 may serve as the bridge between device 101 and host system 110 by forwarding memory access requests (e.g., ATS request 113) and ensuring proper communication between the endpoint devices and host system 110.

In some examples, root complex 105 forwards the ATS request to IOMMU 108 for translation. IOMMU 108 handles address translation for input/output (I/O) devices (e.g., device 101) and ensures that each device only accesses memory regions it is authorized to. In some embodiments, processor 109 and MMU 111 may also be involved in address translation when processor 109 requires memory access. For instance, the term "processor" may refer to a central processing unit or other computing unit responsible for executing instructions and managing the overall operations of a system. In some cases, processor 109 may generate virtual addresses when performing memory operations, which may be translated into physical addresses by MMU 111. Examples of memory management units may include, without limitation, CPU MMU, GPU MMU, virtual MMU, and/or the like. Depending on the implementation, MMU 111 may be implemented as a separate dedicated hardware unit or integrated directly within the CPU as part of the system-on-chip (SoC) architecture.

In various implementations, ATPT 106 is configured to store mappings of virtual addresses to their corresponding physical addresses. During the translation process, IOMMU 108 or MMU 111 may refer to ATPT 106 to retrieve the appropriate physical address based on the virtual address provided by device 101 or processor 109. For example, if device 101 needs to transfer data to memory 103, IOMMU 108 may access ATPT 106 to translate the address and complete the data transfer. ATPT 106 ensures that memory access is secure and efficient by maintaining up-to-date mappings for the system's memory addresses. Once the address translation is completed, root complex 105 may send ATS response 114 back to device 101, providing the translated physical address. Device 101 can then use this physical address to perform the required DMA operation and access the correct location in memory 103.

In some embodiments, memory controller 104 may be configured to manage the communication between processor 109 and memory 103, ensuring that data requests from the devices (e.g., device 101) are handled efficiently. For instance, the term "memory controller" may refer to a hardware component that manages data flow to and from memory. Depending on the implementation, memory controller 104 may include an integrated controller in SoC or a dedicated controller within a memory management subsystem. In some cases, once the virtual address from device 101 is translated to a physical address, memory controller 104 coordinates the transfer of data to or from that location in memory 103. Memory 103 may include the system's primary storage (e.g., random-access memory (RAM) or other types of volatile/non-volatile memory) where data is temporarily or permanently stored. Memory 103 can be used to store program instructions, operational data, system configurations, and/or the like.

To optimize address translation efficiency, host system 110 may also include a first cache 107. For instance, the term "cache" may refer to a memory or storage component that temporarily holds frequently accessed data, instructions, or address mappings to reduce the time required to retrieve them. In some examples, first cache 107 may include an address translation cache (ATC), which may be configured to store recently translated address mappings. This allows host system 110 to quickly retrieve the necessary mappings for future translation requests, rather than performing the translation from scratch.

To reduce the overhead of address translation performed by host system 110, address translation may also be performed locally by device 101. In various implementations, device 101 may include a second cache 102, which stores recently translated address mappings at the device level. By caching these translations, device 101 can avoid sending repeated ATS requests for the same memory regions, thereby reducing the overhead associated with frequent address translations. If the required address mapping is available in ATC 102, device 101 can retrieve the physical address directly from the cache without needing to request translation from host system 110, thus speeding up the memory access operations.

However, second cache 102 may be limited in its capacity, meaning it can only store a finite number of address mappings at a time. This limitation can result in cache misses, requiring device 101 to rely on host system 110 for address translations. This may lead to situations where device 101 needs to send ATS requests again for addresses that were previously cached but have been removed due to space constraints. Frequent cache misses may increase latency, especially in systems with high data throughput or workloads that involve frequent access to a large set of memory regions. In such cases, optimizing cache management across multiple levels of the system becomes beneficial to minimize latency and maintain performance.

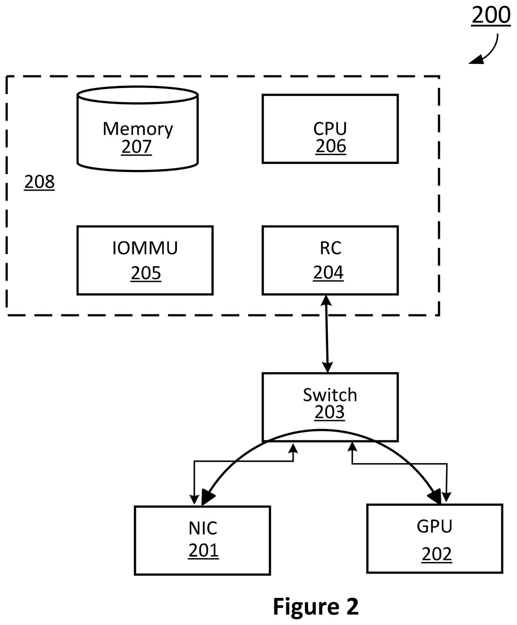

Figure 2 is a schematic diagram illustrating an architecture of a computing system 200 that supports direct memory access (DMA), in accordance with various embodiments of the subject technology. This diagram merely provides an example, which should not unduly limit the scope of the claims. One of ordinary skill in the art would recognize many variations, alternatives, and modifications.

In various implementations, computing system 200 includes multiple devices connected via switch 203 to facilitate high-speed communication and DMA operations. For instance, system 200 may include one or more endpoint devices, such as NIC 201 and GPU 202. NIC 201 may be responsible for handling network communication and data transfers to and from external networks. In systems where large amounts of data need to be ingested or distributed, such as in cloud computing or high-performance data centers, NICs are beneficial for efficiently moving data across the system. In some examples, GPU 202 may be used for handling computationally intensive tasks such as AI model training, parallel data processing, or high-speed rendering.

In some embodiments, one or more endpoint devices (e.g., NIC 201 and GPU 202) may be coupled to switch 203, which facilitates data routing between them and host system 208. For example, the term "switch" may refer to a hardware component that facilitates communication between multiple devices by managing the flow of data across shared communication pathways. Examples of switches may include, without limitation, PCIe switches, Ethernet switches, InfiniBand switches, fibre channel switches, and/or the like. In some examples, switch 203 includes a PCIe switch, which is designed to connect various PCIe-compatible devices such as NICs, GPUs, storage devices, and other peripheral devices. The PCIe switch acts as an intermediary between these devices and host system 208, facilitating high-speed data transfers between devices on the PCIe bus.

According to various embodiments, host system 208 may include multiple components for managing memory access and address translation. For instance, host system 208 may include at least one of memory 207, CPU 206, root complex 204, IOMMU 205, and/or the like. Root complex 204 may act as an intermediary between the endpoint devices (e.g., NIC 201 and GPU 202) and CPU 206, controlling the flow of data and ensuring communication between the devices and system memory 207. Memory 207 may be used to store data for processing and communication between devices. Depending on the implementation, memory 207 may be any suitable type of volatile or non-volatile memory, such as dynamic random-access memory (DRAM), static random-access memory (SRAM), NAND flash, or other memory storage systems. IOMMU 205 may be responsible for performing address translations between the virtual addresses used by the endpoint devices and the corresponding physical addresses in memory 207, ensuring secure and efficient data transfers during DMA operations.

In some implementations, switch 203 may include an address translation cache to facilitate address translation. The ATC can store recently translated address mappings to speed up the process of retrieving physical addresses without needing to constantly refer back to host system 208. This local cache allows switch 203 to quickly access mappings when the same memory regions are accessed multiple times, reducing latency and improving overall system efficiency.

In certain implementations, switch 203 may be configured to monitor (or "snoop") ATS transactions between the endpoint devices and root complex 204. When an ATS request is sent by an endpoint device (e.g., NIC 201 or GPU 202) to root complex 204 to perform an address translation, switch 203 can observe the transaction and add the translated address to its own ATC. This caching process reduces the need for subsequent ATS requests for the same addresses and can enhance performance by minimizing the frequency of address translations needed from host system 208. Additionally, switch 203 helps alleviate the burden on endpoint devices with limited local cache capacity by providing an additional layer of caching, allowing endpoint devices to retrieve translated addresses directly from the switch's cache.

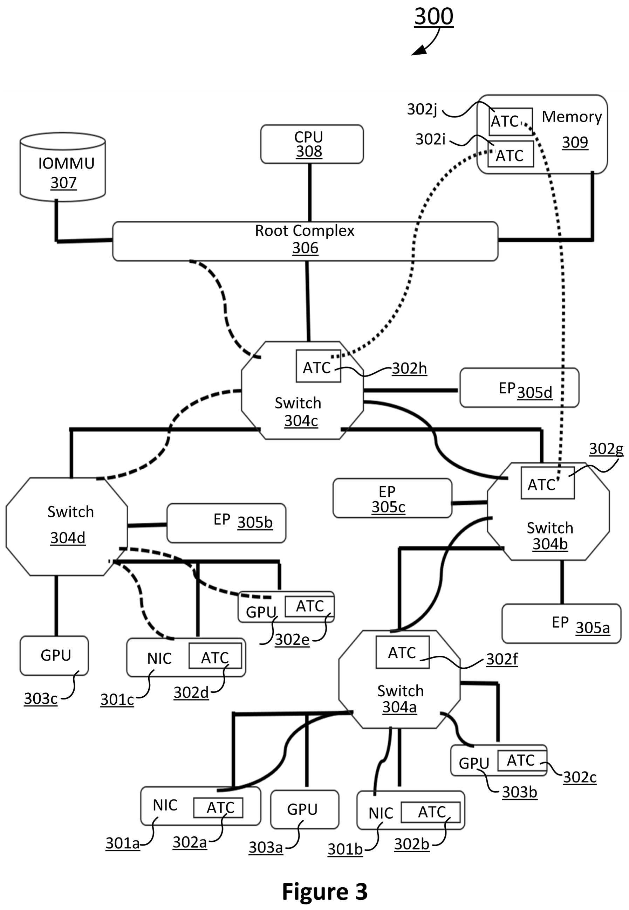

Figure 3 is a schematic diagram illustrating a hierarchical PCIe switch system 300 with integrated address translation cache (ATC), in accordance with various embodiments of the subject technology. This diagram merely provides an example, which should not unduly limit the scope of the claims. One of ordinary skill in the art would recognize many variations, alternatives, and modifications.

In various implementations, system 300 includes multiple switches (e.g., switch 304a, switch 304b, switch 304c, and switch 304d), which facilitate communication between various endpoint devices (e.g., NICs 301a-301c, GPUs 303a-303c, and/or other endpoint devices 305a-305d) and a host system. The switches may be connected in a hierarchical structure, allowing for efficient routing of data across multiple devices. In some examples, the host system may include at least one of root complex 306, IOMMU 307, CPU 308, memory 309, and/or the like.

According to some embodiments, one or more endpoint devices, such as NICs and GPUs, may implement an ATS and maintain its own ATC (e.g., ATCs 302a-e), allowing it to perform local address translations without relying on the host system for every transaction. However, the number of cache entries in the endpoint devices may be limited. In some cases, one or more switches may include an ATC, which stores recently translated address mappings to reduce latency and improve the performance of data transfers. For example, switches 304a-304c may include ATCs (e.g., ATC 302f, ATC 302g, and ATC 302h) that assist with storing and managing address mappings for various endpoint devices. For example, endpoint devices such as NICs 301a-b may rely on their own ATCs (e.g., ATCs 302a-b) to store address translations. When these ATCs run out of storage capacity, the switches may provide additional caching support through their integrated ATCs.

In certain implementations, when an endpoint device (e.g., NIC 301a) initiates a DMA transaction, it sends a request containing a virtual address. If the endpoint's local ATC contains the corresponding physical address, a cache hit occurs (e.g., indicated by solid lines), allowing the DMA operation to proceed without further delays. If the required translation is not found in the local ATC, the request may be forwarded to a higher-level component in the hierarchy (e.g., switch 304a). If switch 304a's ATC contains the necessary translation, the transaction can proceed immediately. If not, the request may then be forwarded to the next switch in the hierarchy (e.g., switch 304b, switch 304c, and so on), which may also check their own ATCs for the address mapping. In this hierarchical structure, each switch in the chain has the opportunity to handle the address translation, reducing the need for the request to reach the host system. This tiered approach improves overall efficiency by reducing the load on the host system, speeding up memory access operations.

In some examples, if neither the endpoint device nor the PCIe switches have the required translation, a cache miss continues (e.g., indicated by dashed lines), and the request may be escalated to the host system. For instance, if NIC 301c or GPU 302e encounters a cache miss in their local ATCs, and switch 304c's ATC (e.g., ATC 302h) also does not contain the required mapping, the request may be forwarded to root complex 306 in the host system. From there, IOMMU 307 performs the address translation, retrieving the correct physical address and sending the translated address back down the hierarchy. This multi-level caching approach reduces the need for frequent address translation requests at higher levels, ensuring that most transactions are handled locally within the PCIe hierarchy.

In various implementations, system 300 can implement a hierarchical caching system that uses a portion of host memory 309 as an extended cache (e.g., ATC 302i, 302j) to store excess cache entries when the ATC in a switch or endpoint device runs out of space. When the switches (e.g., switches 304b-c) cannot store all the necessary mappings in their own ATC due to space limitations, they can retrieve entries from an extended cache maintained in system memory 309 (e.g., indicated by dotted lines). This extended cache in memory 309 provides additional storage for address mappings, ensuring that the system can continue to perform address translations efficiently even when the local hardware caches in the PCIe switches or endpoint devices are full.

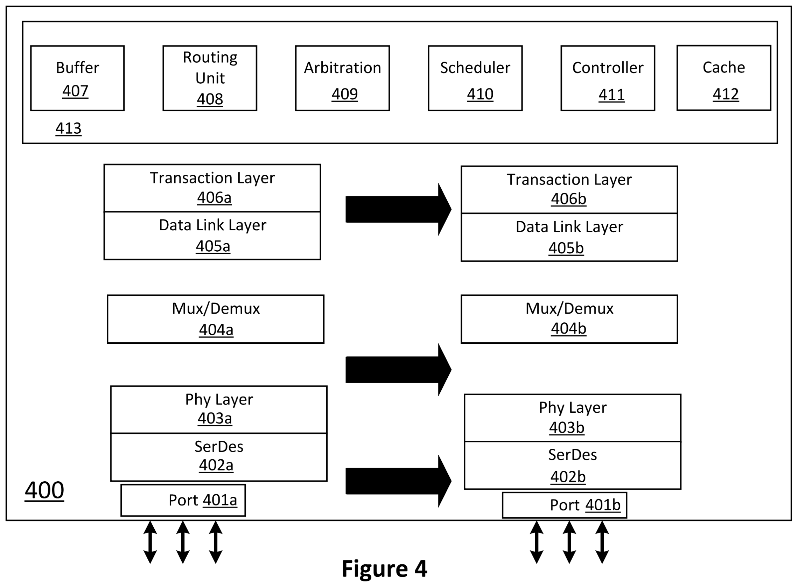

Figure 4 is a schematic diagram illustrating a switch apparatus 400, in accordance with various embodiments of the subject technology. This diagram merely provides an example, which should not unduly limit the scope of the claims. One of ordinary skill in the art would recognize many variations, alternatives, and modifications.

In various implementations, switch apparatus 400 may be a part of a larger distributed system (e.g., system 300 of Figure 3). Switch 400 may be configured to manage data routing, memory access requests, and address translation between multiple endpoint devices (e.g., NICs, processors, or other peripherals) and external networks, ensuring seamless communication and high-speed data transfers. It can be deployed in various applications such as data centers, cloud computing infrastructures, high-performance computing systems, AI training environments, ML processing, and/or the like. Depending on the implementation, switch apparatus 400 can be integrated into hierarchical systems involving multiple layers of switches and devices and may utilize distributed caching mechanisms (e.g., ATCs), to optimize memory access and reduce latency across the system hierarchy.

As shown, switch apparatus 400 may include one or more ports (e.g., first port 401a and second port 401b). For example, the term "port" may refer to a physical or logical interface on a switch through which data can be transmitted and received. Ports serve as connection points for endpoint devices (e.g., NICs, processors) and external networks, allowing for the flow of data between these components. Examples of ports may include, without limitation, PCIe ports, Ethernet ports, InfiniBand ports, or other communication interfaces. Depending on the implementation, the ports may function as upstream ports or downstream ports. Upstream ports may connect the switch to upstream components (e.g., the host system or higher-level network), while downstream ports may connect the switch to downstream components (e.g., endpoint devices).

In various implementations, switch apparatus 400 may be implemented as a PCIe switch and may be coupled to one or more endpoint devices (e.g., NICs, GPUs, storage controllers, etc.). One or more endpoint devices may be connected via a PCIe interface. For instance, the term "PCIe interface" may refer to a physical or logical connection that allows devices to communicate over the PCIe standard.

In some embodiments, first port 401a may be configured to receive a first request associated with a first address. For instance, the term "request" may refer to a communication or command sent by a device to initiate a specific operation, such as data retrieval, memory access, or a processing task. Requests can be generated by endpoint devices like NICs, GPUs, or other peripherals when they need to perform tasks such as DMA or data transmission. Examples of requests may include, without limitation, memory read requests, write requests, address translation requests, and/or the like. The term "address" may refer to a location in memory or a communication destination used by devices to access data or transmit information. Depending on the implementation, the first address may include a virtual address or a physical address.

In some embodiments, switch apparatus 400 further includes one or more processing layers that are responsible for various stages of data handling, error detection, and protocol management as data flows through the switch. One or more processing layers may include, without limitation, SerDes layers 402a-b, physical layers 403a-b, mux/demux layers 404a-b, data link layers 405a-b, transaction layers 406a-b, and/or the like.

In some implementations, SerDes layers 402a-b may include serializer-deserializer circuits that convert parallel data into serial data for transmission over high-speed communication links and then convert serial data back into parallel data for further processing. SerDes layers 402a-b enable high-speed data transfers by reducing the number of data lines required for communication, which is beneficial for maintaining high data transfer rates between devices.

After the SerDes conversion, the data may move through physical layers 403a-b, which are responsible for handling the physical transmission of data across the communication medium, ensuring that signals are properly synchronized and transmitted with minimal loss. Mux/demux layers 404a-b manages the flow of data by combining multiple data signals into a single stream (e.g., multiplexing) or separating a single data stream into multiple signals (e.g., demultiplexing). These processing layers enable efficient use of the communication channels by dynamically managing the available bandwidth and ensuring that data is transmitted to the appropriate endpoints.

In various embodiments, data link layers 405a-b and transaction layers 406a-b handle the higher-level communication protocols, ensuring that data packets are properly formatted, verified, and transmitted across switch apparatus 400. For instance, data link layers 405a-b provide error detection and correction mechanisms, ensuring that data transmitted between devices is reliable and free of errors. Transaction layers 406a-b manage the actual data transfer transactions between devices, determining how data is sent, received, and processed at each endpoint.

According to some embodiments, switch apparatus 400 may include switch core 413. For example, the term "switch core" refers to a central processing unit of a switch that manages the overall data flow and controls how data is routed and processed within the switch. Switch core 413 may be configured to control the internal operations of switch apparatus 400, managing how data flows between the ports, and coordinating communication between connected devices. In various examples, switch core 413 may facilitate address translation by managing how requests for address translation are processed and directing the flow of these requests between different components within switch apparatus 400. For instance, switch core 413 may include at least one of buffer 407, routing unit 408, arbitration unit 409, scheduler 410, controller 411, cache 412, and/or the like.

In some examples, switch core 413 further includes buffer 407, which may be configured to store the first request. For example, the term "buffer" may refer to a memory element or storage area that is used to temporarily hold data. Buffer 407 serves to smooth out the flow of data by accommodating differences in data transfer rates between different components or devices. In some cases, data arriving from a NIC or external network might arrive at a higher rate than the system can process, buffer 407 may temporarily store this data until the system is ready to process or transmit it to its final destination. By holding data before it is processed, buffer 407 ensures that the system can handle multiple requests simultaneously, preventing bottlenecks and maintaining a steady flow of information through switch apparatus 400.

In various implementations, switch core 413 further includes cache 412. For instance, cache 412 may include an ATC, which may be configured to store a plurality of mapping entries. For instance, the term "mapping entry" may refer to a record that associates a first address (e.g., a virtual address) with a second address (e.g., a physical address). The mapping entries may be used during the address translation process, where a virtual address used by an endpoint device must be translated into a physical address that corresponds to a specific location in memory for data transfer operations (e.g., DMA). In some examples, the plurality of mapping entries may include additional metadata, such as the access frequency of each entry, the time the entry was added to the cache, or the size of the memory region associated with the address.

In some embodiments, switch core 413 further includes routing unit 408. For example, the term "routing unit" may refer to a component responsible for determining the path data takes within the switch, ensuring that it is directed to the appropriate device or network destination. Routing unit 408 is responsible for determining the appropriate destination for each request based on the address information it contains. In cases where address translation is required, routing unit 408 coordinates with other components (e.g., cache 412) to facilitate efficient memory access operations.

In various examples, routing unit 408 may be coupled to cache 412. When the first request is received from an endpoint device at port 401a, routing unit 408 is responsible for determining whether the corresponding address mapping exists in the cache. In some examples, routing unit 408 queries cache 412 to determine a presence or an absence of a second address in the plurality of mapping entries. The second address may be associated with the first address. Depending on the implementation, the second address may include a virtual address or a physical address. For instance, the first address may include a virtual address, which is used by an endpoint device (e.g., a NIC or GPU) to access memory. This virtual address does not directly correspond to a physical memory location and must be translated into the second address, which includes the corresponding physical address where the data resides in memory.

Routing unit 408 plays an important role in the address translation process by determining if the second address (e.g., the physical address) is already available in cache 412, which stores previously translated address mappings. For example, in response to a determination of the presence of the second address in the plurality of mapping entries (e.g., a cache hit), routing unit 408 may retrieve the second address from cache 412 and determine the appropriate destination for the first request based on the second address. By retrieving the second address from cache 412, routing unit 408 avoids the need to request an address translation from an upstream component (e.g., the host system), thereby reducing latency and speeding up the overall data transfer process.

In response to a determination of the absence of the second address in the plurality of mapping entries (e.g., a cache miss), routing unit 408 may forward the first request to an upstream component (e.g., the host system or higher-level network) to perform the address translation. In some examples, routing unit 408 may forward the first request to a first device to obtain the second address. The first device may be configured to provide the second address by performing an address translation based on the first address. Once the address translation is completed, the second address may be returned to switch apparatus 400. Routing unit 408 may determine the appropriate destination based on the second address and route the first request to that destination through second port 401b. In various examples, routing unit 408 may also update cache 412 with a new mapping entry (e.g., a first mapping entry) that associates the first address with the second address, ensuring that future requests involving the same virtual address can be handled more efficiently.

In some implementations, switch core 413 further includes controller 411, which may be coupled to cache 412. For instance, the term "controller" may refer to a hardware or software component responsible for managing the operation of one or more elements within a device. Depending on the implementation, controller 411 may be implemented as dedicated hardware circuits, programmable logic units, or embedded software modules.

In some embodiments, controller 411 is configured to manage the operations of cache 412 and regulate how mapping entries are stored and maintained within cache 412. For instance, controller 411 may be responsible for implementing cache management policies based on predefined criteria, such as access frequency, storage duration, cache capacity, and/or the like.

As an example, the term "access frequency" may refer to how often a specific mapping entry is requested or used by the system. Mapping entries that are accessed frequently are more likely to remain relevant for future address translation requests. Controller 411 can track how often each entry in cache 412 is accessed and prioritize retaining frequently accessed mappings. For example, a mapping that is accessed regularly by a high-performance computing task or AI training model may be kept in cache 412 longer to avoid repeated requests for address translation from external components. Conversely, less frequently accessed mappings may be deprioritized and eventually removed from cache 412 to make space for more critical entries.

In some examples, the term "storage duration" may refer to the length of time a mapping entry has been stored in cache 412. For instance, controller 411 may apply policies to limit how long specific entries are retained, especially if they haven't been accessed in a while. For instance, if the first mapping entry has not been used for a predefined period, the controller may decide to remove it to free up space for new entries. This approach helps to ensure that stale or outdated mappings do not occupy valuable space in cache 412, thus maintaining cache efficiency and ensuring that only useful, up-to-date mappings are stored.

In some cases, the term "cache capacity" may refer to the total amount of space available in cache 412 to store mapping entries. Since cache memory may be limited in size, controller 411 can regulate how many entries can be stored at any given time. If the cache capacity is full and a new entry needs to be added (e.g., following a cache miss), controller 411 may decide which existing entries should be replaced or evicted. For example, controller 411 may remove the least recently used (LRU) or least frequently accessed entries to maintain an optimal cache size.

In various implementations, scheduler 410 may be coupled to controller 411. For example, the term "scheduler" may refer to a component responsible for managing the timing and coordination of tasks within a system. Examples of schedulers may include, without limitation, round robin schedulers, priority-based schedulers, credit-based schedulers, and/or the like. Scheduler 410 may be configured to manage the execution and sequencing of data transmission tasks, ensuring that resources are allocated effectively and that devices operate in sync. Depending on the implementation, scheduler 410 may be configured to coordinate the flow of data, manage the timing of tasks, and/or detect the operational status of endpoint devices.

In some embodiments, switch core 413 further includes arbitration unit 409. For instance, the term "arbitration unit" may refer to a component responsible for managing access to shared resources, such as data paths or communication channels. In various examples, when multiple devices connected to switch apparatus 400 request access to the same resource simultaneously, arbitration unit 409 decides which device gets priority based on predefined rules or scheduling algorithms. This process ensures that data flows efficiently between devices and prevents resource contention or traffic bottlenecks. Examples of arbitration mechanisms include priority-based arbitration, round-robin arbitration, and weighted fair queuing,

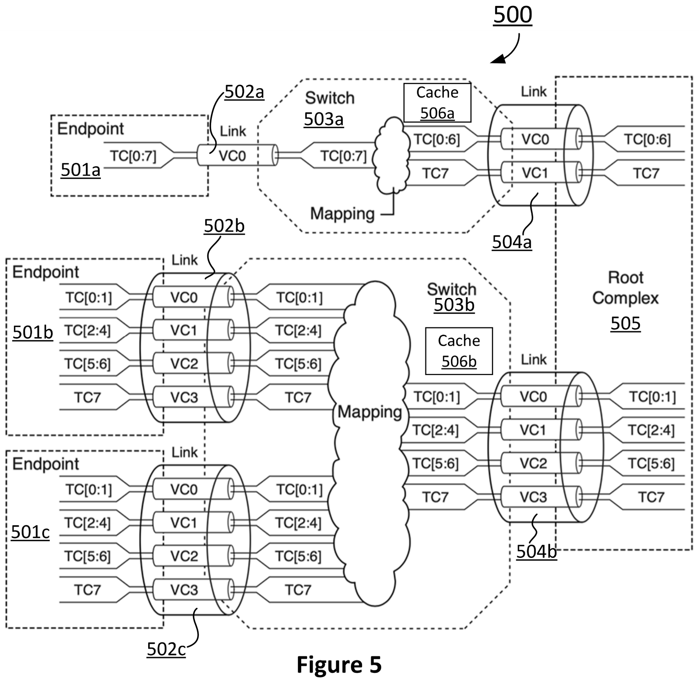

Figure 5 is a schematic diagram illustrating switch mappings and configuration of computing system 500, in accordance with various embodiments of the subject technology. This diagram merely provides an example, which should not unduly limit the scope of the claims. One of ordinary skill in the art would recognize many variations, alternatives, and modifications.

In various implementations, system 500 includes multiple endpoint devices 501a-c, switches 503a-b, and a root complex 505 interconnected via data links, representing a distributed switching architecture. The endpoint devices (e.g., NICs, GPUs, or storage controllers) are responsible for initiating and processing data transfers across the network. For instance, endpoint device 501a may communicate with switch 503a via link 502a. Endpoint devices 501b and 501c may communicate with switch 503b via links 502b and 502c, respectively. Each endpoint device may send data or requests through a switch, which manages data routing and address translation as part of the communication process.

In some embodiments, each link in system 500 may be configured to support a variety of virtual channels (VC) (e.g., VC0, VC1, VC2, and VC3), which manage traffic classes (e.g., TC[0:1], TC[2:4], TC[5:6], TC7) that prioritize different types of data flows. These traffic classes represent priority levels for data packets, allowing critical data to be transmitted with higher priority over lower-priority packets. The mapping between traffic classes and virtual channels ensures efficient bandwidth allocation and proper data flow control within the switching infrastructure. Depending on the application, switches 503a and 503b may support multiple layers of virtual channels and traffic classes to handle high-priority data, bulk transfers, time-sensitive operations, and/or the like.

Root complex 505 may be configured to connect the switches (e.g., switches 503a-b) to the broader system (e.g., host system), managing how data is routed between the various endpoint devices and coordinating communication across the network. For instance, switches 503a-b may be coupled to root complex 505 via links 504a-b, respectively. In some embodiments, root complex 505 interacts with multiple switches (e.g., 503a and 503b) to optimize traffic flow between endpoint devices and higher-level system components.

In various implementations, switch 503a includes cache 506a, and switch 503b includes cache 506b. These caches are responsible for storing address translation entries, which associate virtual addresses with physical addresses. When an endpoint device (e.g., 501a or 501b) initiates a request for data transfer, the switch (e.g., 503a or 503b) may check its cache to determine if the required address translation is already stored. If the cache contains the mapping, the switch can directly route the request to the correct memory location, reducing the time needed for the translation process.

It is to be appreciated that cache 506a and cache 506b in the switches help alleviate the load on endpoint devices, which may have limited cache capacity. When the local cache of an endpoint device (e.g., 501a or 501b) runs out of capacity, the switch's cache can act as an additional layer of storage, further improving the system's ability to handle large volumes of data transfers efficiently. In the event of a cache miss in both the endpoint device and the switch, the request can be forwarded to root complex 505 or the IOMMU of the host system for address translation. Once the translation is completed, the result can be stored in the endpoint's local cache and/or the switch's cache to reduce latency for future requests involving the same addresses.

While the above is a full description of the specific embodiments, various modifications, alternative constructions and equivalents may be used. Therefore, the above description and illustrations should not be taken as limiting the scope of the subject technology which is defined by the appended claims.

## Claims

1. A switch apparatus comprising:
a first port configured to receive a first request associated with a first address;
a cache configured to store a plurality of mapping entries;
a routing unit coupled to the cache, the routing unit being configured to:
determine a presence or an absence of a second address in the plurality of mapping entries, the second address being associated with the first address;
in response to a determination of the presence of the second address in the plurality of mapping entries, retrieve the second address; and
in response to a determination of the absence of the second address in the plurality of mapping entries, forward the first request to a first device to obtain the second address; and
a second port coupled to the routing unit, the second port being configured to transmit the first request based on the second address;
wherein the routing unit is configured to update the cache with a first mapping entry associating the first address with the second address obtained from the first device.

2. The apparatus of claim 1, wherein
the first device is configured to provide the second address by performing an address translation based on the first address.

3. The apparatus of claim 1 or 2, further comprising
a buffer coupled to the routing unit, the buffer being configured to store the first request.

4. The apparatus of any one of the claims 1 to 3, further comprising
a controller coupled to the cache, the controller being configured to manage the plurality of mapping entries stored in the cache based on a predetermined criterion.

5. The apparatus of claim 4, wherein
the predetermined criterion comprises at least one of an access frequency, a storage duration, or a cache capacity.

6. The apparatus of any one of the claims 1 to 5, wherein
the first address comprises a virtual address.

7. The apparatus of any one of the claims 1 to 6, wherein
the second address comprises a physical address.

8. The apparatus of any one of the claims 1 to 7, wherein
the first request comprises a direct memory access (DMA) request.

9. The apparatus of any one of the claims 1 to 8, wherein
the first device comprises an upstream component.

10. The apparatus of claim 9, wherein
the upstream component comprises a second switch or a host.

11. A switch apparatus comprising:
a first port configured to receive a first request associated with a first address;
a cache configured to store a plurality of mapping entries, the plurality of mapping entries comprising a first mapping entry associating the first address with a second address;
a controller coupled to the cache, the controller being configured to manage the plurality of mapping entries stored in the cache based on a predetermined criterion;
a routing unit coupled to the cache, the routing unit being configured to determine a destination for the first request based on the second address; and
a second port coupled to the routing unit, the second port being configured to transmit the first request to the destination.

12. The apparatus of claim 11, wherein
the predetermined criterion comprises at least one of an access frequency, a storage duration, or a cache capacity.

13. The apparatus of claim 11 or 12, wherein
the first address comprises a virtual address and the second address comprises a physical address.
